Europäisches Patentamt

European Patent Office

Office européen des brevets

(11) Numéro de publication : **0 338 882 B1**

(12) **FASCICULE DE BREVET EUROPEEN**

(19)

(45) Date de publication du fascicule du brevet :
**20.05.92 Bulletin 92/21**

(21) Numéro de dépôt : **89400902.6**

(22) Date de dépôt : **31.03.89**

(51) Int. Cl.⁵ : **F02B 19/14**

(54) Moteur à allumage par compression comportant une préchambre dont le canal de transfert est rectiligne et incliné.

(30) Priorité : **21.04.88 FR 8805303**

(43) Date de publication de la demande :
**25.10.89 Bulletin 89/43**

(45) Mention de la délivrance du brevet :
**20.05.92 Bulletin 92/21**

(84) Etats contractants désignés :
**DE GB IT**

(56) Documents cités :
**EP-A- 0 264 312**
**FR-A- 790 892**
**FR-A- 1 069 788**
**FR-A- 1 289 730**
**FR-A- 2 600 718**
**GB-A- 374 994**
**GB-A- 625 946**
**US-A- 2 058 827**

(56) Documents cités :
**MOTORTECHNISCHE ZEITSCHRIFT. vol. 45,
no. 2, 29 février 1984, STUTTGART DE page 65
- 69; SCHMIDT G.F. ET AL.:
"OPTIMIERUNGDES STARTVERHALTENS
VON WIRBELKAMMER-DIESELMOTOREN"**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Moulin, Jean
19, Avenue du Maréchal Joffre
F-78400 Chatou (FR)**
Inventeur : **Advenier, Pierre
35, rue Belliard
F-75018 Paris (FR)**

(74) Mandataire : **Kohn, Philippe et al
c/o CABINET LAVOIX 2, place d'Estienne
d'Orves
F-75441 Paris Cédex 09 (FR)**

## Description

L'invention concerne un moteur à allumage par compression comportant une préchambre dont le canal de transfert est rectiligne et incliné par rapport au plan de symétrie de la préchambre.

On connaît des moteurs Diésel comportant, associée à chacun de leurs cylindres, une préchambre de turbulence, par exemple une préchambre du type Ricardo. Le moteur comporte un bloc-cylindre au-dessus duquel est placée une culasse à l'intérieur de laquelle sont disposées les préchambres de turbulence de forme approximativement sphérique. Chacune des préchambres est reliée par un canal à une chambre principale qui est délimitée, à l'intérieur du cylindre correspondant, par la tête du piston et par une partie adjacente de la culasse. Le canal de transfert a de préférence une disposition tangentielle par rapport à la préchambre et met en communication la préchambre avec la chambre principale. Dans la préchambre se trouve placé un injecteur généralement disposé à l'opposé de l'embouchure du canal de transfert et une bougie qui permet d'assurer le préchauffage et l'inflammation du mélange combustible au démarrage à froid du moteur.

La préchambre comporte un plan de symétrie passant par l'axe du cylindre correspondant et la bougie et l'injecteur sont disposés de façon que leurs axes de symétrie soient situés dans ce plan. De même, l'axe longitudinal du canal de transfert qui est généralement rectiligne est disposé dans le plan de symétrie de la préchambre.

Cette disposition correspond à un optimum, en particulier en ce qui concerne la position relative de l'injecteur et de la bougie, ce qui permet d'obtenir des conditions de démarrage satisfaisantes à froid.

Cependant, dans cette disposition, le canal de transfert débouche sous la bougie, si bien qu'il en résulte des perturbations dans l'écoulement des gaz à l'intérieur de la préchambre. La bougie constitue un obstacle aérodynamique très important qui perturbe le champ de vitesse au voisinage de l'injecteur. La combustion s'en trouve dégradée et il en résulte une augmentation des émissions de fumées et d'hydrocarbures imbrûlés.

Il est bien connu que la qualité du fonctionnement d'un moteur Diésel à préchambre est liée à la manière dont le mélange de l'air comprimé par le piston et du combustible pulvérisé par l'injecteur se fait dans la préchambre et à la manière dont les gaz enflammés passent dans la chambre principale.

De préférence, le fluide en déplacement dans la préchambre doit être animé d'un mouvement tourbillonnaire autour d'un axe passant par le centre de la cavité de la chambre.

Cet écoulement tourbillonnaire étant fortement perturbé par la présence de la bougie, il en résulte des performances amoindries du moteur Diésel.

Différentes solutions ont été proposées pour limiter les inconvénients dus à la présence de la bougie. On a par exemple proposé d'utiliser des bougies dont la position, la section, les dimensions et la pénétration dans la préchambre limitent les perturbations. Ces dispositions ne permettent cependant pas de maintenir des conditions favorables en ce qui concerne la position relative de l'injecteur et de la bougie à l'intérieur de la préchambre.

On a proposé, dans le brevet FR-A-2.600.718, une préchambre dont l'axe du canal de transfert est une courbe gauche, la bougie saillante dans la préchambre étant disposée par rapport à ce canal de transfert, de manière qu'un courant tourbillonnaire se forme autour de l'axe de la bougie. Un tel dispositif nécessite cependant un usinage complexe de la préchambre, en raison de la forme du canal de transfert.

On a également proposé, dans le FR-A-1.069.788, un moteur à allumage par compression dont la culasse est usinée pour constituer une préchambre et un canal de transfert qui peut être fortement incliné par rapport à un plan de symétrie de la préchambre. L'usinage de la culasse d'un tel moteur est relativement complexe et l'angle d'inclinaison du canal de transfert ne peut être réglé qu'au moment de l'usinage de la culasse.

On connaît également par le GB-A-625.946, un moteur à allumage par compression comportant pour chacun des cylindres une pièce rapportée à l'intérieur de la culasse dans laquelle est usinée, pour chacun des cylindres du moteur, une partie de la préchambre et un canal de transfert rectiligne. Le piston du cylindre est usiné à sa partie supérieure pour constituer une cavité dans le prolongement du canal de transfert. La disposition symétrique du canal de transfert et de la cavité du piston présentent les inconvénients mentionnés plus haut.

Le but de l'invention est donc de proposer un moteur à allumage par compression comportant au moins un cylindre dans lequel se déplace un piston et une préchambre de turbulence constituée, au moins dans sa partie inférieure, par une pièce rapportée à l'intérieur de la culasse dans laquelle est usiné un canal de transfert rectiligne communiquant avec le cylindre, la préchambre présentant un plan de symétrie P passant par l'axe du cylindre et comportant une bougie de préchauffage et un injecteur dont les axes de symétrie sont situés dans le plan de symétrie P de la préchambre, l'axe longitudinal du canal de transfert faisant un angle $\alpha$ non nul avec le plan de symétrie et la partie supérieure du piston disposé dans le cylindre étant usinée pour constituer une cavité en forme de trèfle dans le prolongement du canal de transfert ayant deux lobes sensiblement circulaires, ce moteur présentant des performances améliorées grâce au fait que l'écoulement tourbillonnaire n'est pas perturbé par la présence de la bougie dans la préchambre, sans nécessiter toutefois un usinage spécial de la culasse et/ou de la préchambre.

Dans ce but, l'orientation de l'axe du canal de transfert de la préchambre est obtenue par une rotation de la pièce rapportée à l'intérieur de la culasse, à partir de sa position dans laquelle l'axe du canal de transfert rectiligne se trouve dans le plan de symétrie de la préchambre et que les rayons R1, R2 des deux lobes de la cavité du piston sont inégaux.

Afin de bien faire comprendre l'invention, on va maintenant décrire, à titre d'exemple non limitatif, en se référant aux figures jointes en annexe, un mode de réalisation d'un moteur suivant l'invention, comparativement à un moteur suivant l'art antérieur.

La figure 1 est une vue en coupe par un plan vertical d'une partie d'un moteur Diésel de type classique comportant une préchambre de turbulence.

La figure 2 est une vue en perspective, avec arrachement, d'une préchambre d'un moteur suivant l'art antérieur.

La figure 3 est une vue de dessus schématique d'une préchambre suivant l'art antérieur.

La figure 4 est une vue en perspective avec arrachement, d'une préchambre de turbulence suivant l'invention.

La figure 5 est une vue de dessus schématique de la préchambre suivant l'invention.

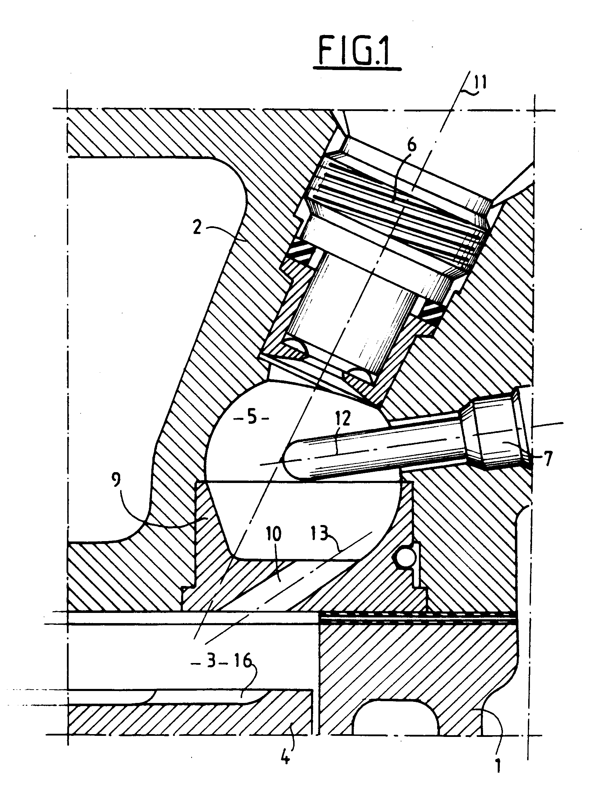

Sur la figure 1, on voit une partie du bloc-cylindre 1 et de la culasse 2 d'un moteur à allumage par compression. Le bloc-cylindre 1 comporte des cylindres tels que 3 dans chacun desquels se déplace un piston 4. La culasse 2 est usinée au-dessus de chacun des cylindres 3, de façon à délimiter une préchambre de turbulence 5 comportant un injecteur de carburant 6 et une bougie de préchauffage 7.

La préchambre 5 de forme sensiblement sphérique est délimitée à sa partie supérieure par une paroi hémisphérique usinée à l'intérieur de la culasse 2. La partie inférieure de la préchambre 5 est usinée à l'intérieur d'une pièce 9 rapportée et fixée à l'intérieur d'un logement de forme correspondante usiné dans la culasse 2.

Un canal de transfert 10 de direction sensiblement tangentielle par rapport à la paroi de la préchambre 5 est usiné à l'intérieur de la pièce 9 et met en communication la partie supérieure du cylindre 3 et la partie inférieure de la préchambre 5.

L'axe 11 de l'injecteur 6, l'axe 12 de la bougie 7 et l'axe 13 du canal 10 sont tous situés dans un même plan qui est un plan de symétrie de la préchambre 5 et du cylindre 3, c'est-à-dire un plan de symétrie de la préchambre 5 passant par l'axe du cylindre 3.

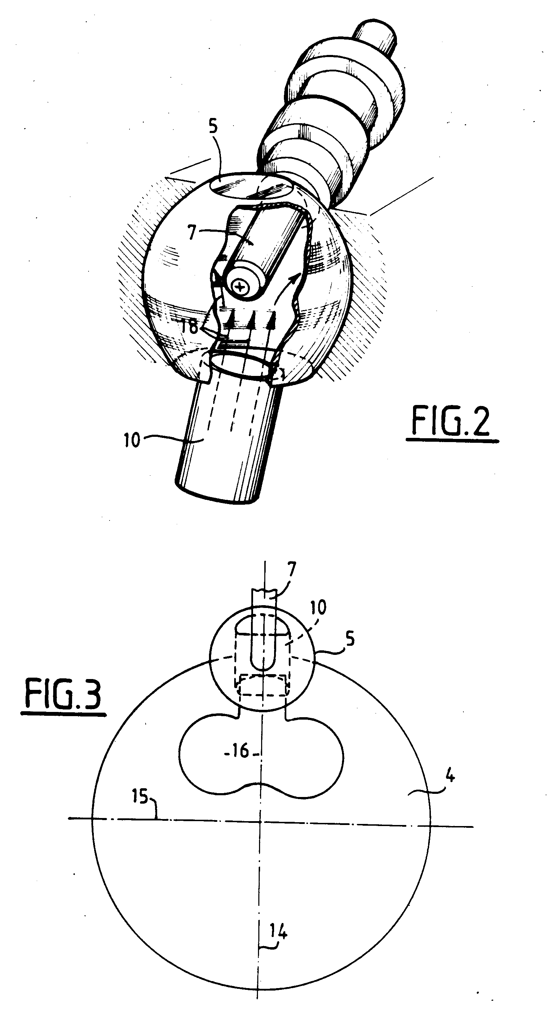

Cette disposition idéale de l'injecteur de la bougie et du canal de transfert est également représentée sur les figures 2 et 3 sur lesquelles les éléments correspondant à ceux représentés sur la figure 1 portent les mêmes repères.

Cette disposition est particulièrement visible sur la figure 3 où l'on a représenté la trace 14 du plan de symétrie sur le plan de figure. Ce plan de symétrie P de trace 14 est perpendiculaire à l'axe 15 du vilebrequin du moteur.

Comme il est visible sur les figures 1 et 3, la surface supérieure du piston 4 est usinée pour constituer une cavité 16 en forme de trèfle de faible profondeur. Cette cavité délimite la chambre principale avec la surface adjacente de la culasse, dans la position haute du piston 4. La forme particulière donnée à cette cavité située dans le prolongement du canal de transfert 10 permet d'assurer une répartition optimale des gaz dans la chambre principale, par rapport au piston 4.

Cependant, comme il est visible sur la figure 2, l'air comprimé dans le cylindre 3 par le piston 4 et refoulé dans la préchambre 5 à travers le canal 10 vient heurter l'extrémité de la bougie 7 saillante dans la préchambre 5 (flèches 18). La présence de la bougie perturbe donc l'écoulement des gaz dans la préchambre, ce qui se traduit par des performances amoindries du moteur.

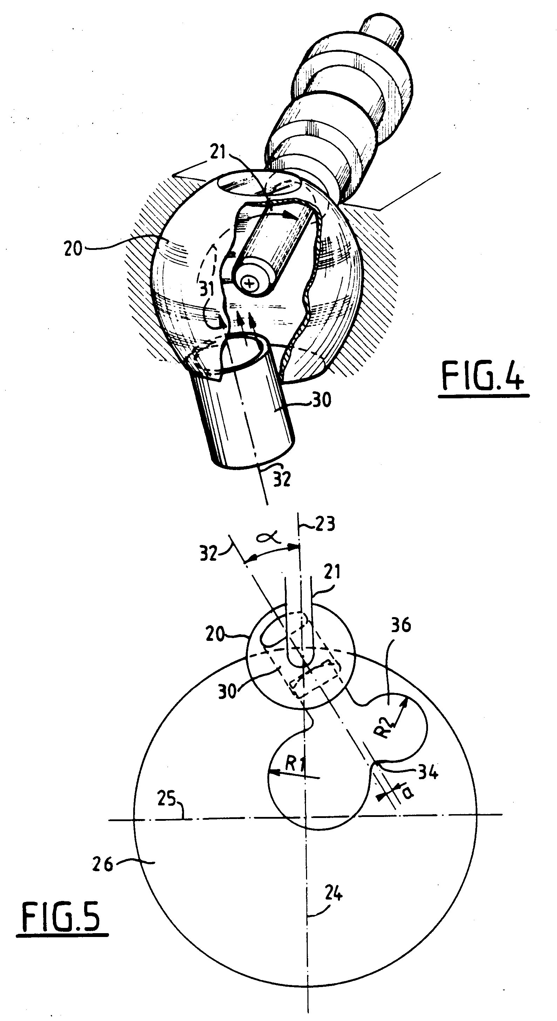

Sur les figures 4 et 5, on a représenté la préchambre 20 d'un moteur suivant l'invention dont la structure générale est identique à la structure du moteur selon l'art antérieur représenté sur la figure 1.

La préchambre 20 a une forme globalement sphérique et comporte une bougie de préchauffage 21 dont l'extrémité saillante à l'intérieur de la chambre 20 comporte un axe 23 situé dans le plan de symétrie de la préchambre 20 de trace 24 sur le plan de la figure 5. Ce plan de symétrie qui est perpendiculaire à l'axe de vilebrequin 25 du moteur passe par l'axe du cylindre auquel est associée la préchambre 20 et dans lequel se déplace le piston 26.

La préchambre 20 comporte également un injecteur qui n'a pas été représenté sur les figures 4 et 5, pour des raisons de clarté. Cet injecteur dont la forme est identique à l'injecteur 6 représenté sur la figure 1 débouche dans la partie supérieure de la préchambre 20 et comporte un axe situé dans le plan de symétrie de trace 24.

Le moteur suivant l'invention respecte donc les conditions idéales en ce qui concerne les positions respectives de la bougie et de l'injecteur.

Cependant, le canal de transfert 30 est incliné par rapport au plan de symétrie et fait avec ce plan un angle α visible sur la figure 5.

Cette disposition permet de diriger les gaz pénétrant dans la préchambre 20 latéralement de façon à faire circuler ces gaz dans un mouvement tourbillonnaire autour de l'axe 23 de la bougie 21 (flèches 31 sur la figure 4). La circulation des gaz dans la préchambre 20 n'est donc pas perturbée par la partie saillante de la bougie 21.

On voit sur la figure 5 que le piston 26 correspondant à la préchambre 20 est usiné pour constituer une cavité en forme de trèfle 36 située dans le prolongement du canal de transfert 30 dont l'axe 32 fait un

angle $\alpha$ avec le plan de symétrie de la pré-chambre 20 dont la trace 24 est visible sur la figure 5.

La cavité 36 en forme de trèfle est dissymétrique et comporte deux lobes sensiblement circulaires ayant des rayons R1 et R2 différents. De plus, le point de raccordement 34 des deux lobes du trèfle 36 est désaxé d'une distance a par rapport à l'axe 32 du conduit 30.

Cette disposition et cette forme données au trèfle 36 permettent de recentrer l'écoulement des gaz en cours de combustion, par rapport au piston 26. On obtient ainsi une combustion homogène et une bonne répartition des gaz de combustion dans la préchambre et dans la chambre principale, malgré la position inclinée du canal de transfert 30.

Il est à remarquer que la disposition inclinée suivant l'invention du canal de transfert 30 peut être obtenue, dans le cas où la préchambre est constituée, dans sa partie inférieure, par une pièce rapportée 9, comme représenté sur la figure 1, par une simple rotation d'un angle voulu de cette pièce symétrique de révolution, à l'intérieur de son logement dans la culasse, à partir de sa position représentée sur la figure 1 où l'axe du canal de transfert se trouve dans le plan de symétrie de la préchambre.

La réalisation du moteur amélioré suivant l'invention ne nécessite donc pas l'usinage d'une pièce spéciale mais simplement une orientation différente de la pièce délimitant la préchambre, dans son logement.

Cette rotation de la pièce rapportée, à partir de sa position représentée sur la figure 1, sera de préférence comprise entre 10 et 20°.

Le piston 26 devra être usiné pour réaliser sur sa partie supérieure une cavité en forme de trèfle dissymétrique telle que la cavité 36 représentée sur la figure 5.

De manière avantageuse, cette cavité en forme de trèfle comportera deux lobes dont les rayons R1 et R2 sont tels que le rapport R1/R2 soit compris entre 1 et 2. Le désaxage a du point de raccordement 34 des deux lobes sera généralement compris entre 0.5 et 10 mm.

L'invention permet d'augmenter le rendement du moteur et de réduire les émissions de fumées et de gaz imbrûlés tout en préservant une bonne qualité du démarrage à froid. Les résultats sont obtenus en maintenant l'axe de la bougie et de l'injecteur dans le plan de symétrie de la préchambre et en faisant circuler les gaz autour de l'axe de la bougie. Ces résultats peuvent être obtenus par un simple réglage en orientation de la pièce constituant la partie inférieure de la préchambre, à l'intérieur de la culasse.

L'invention ne se limite pas aux modes de réalisation qui ont été décrits.

C'est ainsi qu'on peut réaliser le canal de transfert directement par usinage de la culasse suivant une direction inclinée par rapport au plan de symétrie de la préchambre. L'inclinaison du canal de transfert peut être variable en fonction de la géométrie de la préchambre de turbulence et de la position de la bougie.

La forme du trèfle et les dimensions relatives de ses lobes pourront être variables en fonction de l'inclinaison $\alpha$ de l'axe du canal de transfert.

Les dimensions du trèfle quant à elles dépendent des caractéristiques dimensionnelles du moteur et en particulier de sa cylindrée.

L'invention s'applique à tout moteur à allumage par compression comportant au moins un cylindre auquel est associé une préchambre de turbulence.

## Revendications

1. Moteur à allumage par compression comportant au moins un cylindre (3) dans lequel se déplace un piston (4, 26) et une préchambre (5, 20) de turbulence constituée, au moins dans sa partie inférieure, par une pièce (9) rapportée à l'intérieur de la culasse (2) dans laquelle est usiné un canal de transfert rectiligne (10, 30) communiquant avec le cylindre (3), la préchambre (5, 20) présentant un plan de symétrie (P) passant par l'axe du cylindre (3) et comportant une bougie de préchauffage (12, 21) et un injecteur (6) dont les axes de symétrie sont situés dans le plan de symétrie de la préchambre (5, 20), caractérisé par le fait que l'axe longitudinal (32) du canal de transfert (30) faisant un angle $\alpha$ non nul avec le plan de symétrie (P) de la préchambre (4, 20) et la partie supérieure du piston (26) disposé dans le cylindre étant usinée pour constituer une cavité (36) en forme de trèfle dans le prolongement du canal de transfert (30) ayant deux lobes sensiblement circulaires, et l'orientation de l'axe (32) du canal de transfert (30) de la préchambre (20) est obtenue par une rotation de la pièce rapportée (9) à l'intérieur de la culasse (2), à partir de sa position dans laquelle l'axe (32) du canal de transfert rectiligne (30) se trouve dans le plan de symétrie de la préchambre (20) et que les rayons (R1, R2) des deux lobes de la cavité (36) du piston (20) sont inégaux.

2. Moteur suivant la revendication 1, caractérisé par le fait que les deux lobes de la cavité (36) en forme de trèfle se raccordent en un point (34) disposé à une distance a de l'axe (32) du canal de transfert (30).

3. Moteur suivant l'une des revendications 1 ou 2, caractérisé par le fait que l'orientation de l'axe (32) du canal de transfert (30) est obtenue par une rotation de la pièce rapportée (9) comprise entre 10 et 20°.

4. Moteur suivant l'une des revendications 1, 2 ou 3, caractérisé par le fait que le rapport R1/R2 des rayons des deux lobes inégaux du trèfle (36) est compris entre 1 et 2.

5. Moteur suivant la revendication 2, caractérisé par le fait que la distance a du point de raccordement (34) des deux lobes du trèfle (36) à l'axe (32) du canal de transfert (30) est comprise entre 0,5 et 10 mm.

**Patentansprüche**

1. Dieselbrennkraftmaschine mit wenigstens einem Zylinder (3), in dem sich ein Kolben (4, 26) bewegt, und einer Wirbelvorkammer (5, 20), die wenigstens in ihrem unteren Teil aus einem im Inneren des Zylinderkopfs (2) angebrachten Teil (9) besteht, in dem ein gerader Schußkanal (10, 30) vorgesehen ist, der mit dem Zylinder (3) verbunden ist, wobei die Vorkammer (5, 20) eine Symmetrieebene (P) aufweist, die durch die Achse des Zylinders (3) läuft, und eine Glühkerze (12, 21) und eine Einspritzdüse (6) besitzt, deren Symmetrieachsen in der Symmetrieebene der Vorkammer (5, 20) liegen, dadurch gekennzeichnet, daß die Längsachse (32) des Schußkanals (30) mit der Symmetrieebene (P) der Vorkammer (5, 20) einen Winkel α von nicht null bildet, daß der obere Teil des im Zylinder angeordneten Kolbens (26), so bearbeitet ist, daß er in der Verlängerung des Schußkanals (30) einen Hohlraum (36) in Form eines Kleeblatts mit zwei im wesentlichen kreisförmigen Lappen bildet, daß die Ausrichtung der Achse (32) des Schußkanals (30) der Vorkammer (20) durch Drehung des im Inneren des Zylinderkopfs (2) angebrachten Teils (9) aus seiner Stellung heraus erreicht wird, in der die Achse (32) des geraden Schußkanals (30) in der Symmetrieebene der Vorkammer (20) liegt, und daß die Radien (R1, R2) der beiden Lappen des Hohlraums (36) des Kolbens (20) ungleich sind.

2. Motor nach Anspruch 1, dadurch gekennzeichnet, daß die beiden Lappen des kleeblattförmigen Hohlraums (36) an einem Punkt (34) aneinander anschließen, der in einem Abstand a von der Achse des Schußkanals (30) liegt.

3. Motor nach einem der Ansprüche 1 oder 2, dadurch gekennzeichnet, daß die Ausrichtung der Achse (32) des Schußkanals (30) durch eine Drehung des angebrachten Teils (9) von 10 bis 20° erreicht wird.

4. Motor nach einem der Ansprüche 1, 2 oder 3, dadurch gekennzeichnet, daß das Verhältnis R1/R2 der Radien der beiden ungleichen Lappen des Kleeblatts (36) 1 bis 2 beträgt.

5. Motor nach Anspruch 2, dadurch gekennzeichnet, daß der bestand a des Anschlußpunkts (34) der beiden Lappen des Kleeblatts (36) von der Achse (32) des Schußkanals (30) 0,5 bis 10 mm beträgt.

**Claims**

1. Compression-ignition engine comprising at least one cylinder (3) in which a piston (4, 26) moves and a swirl antechamber (5, 20) defined, at least in at lower section, by a component (9) mounted inside the cylinder head (2) in which a rectilinear transfer channel (10, 30) is machined communicating with the cylinder (3), the antechamber (5, 20) having a plane of symmetry (P) passing through the axis of the cylinder (3) and containing a heater plug (12, 21) and an injection nozzle (6) whose axes of symmetry lie in the plane of symmetry of the antechamber (5, 20), characterized in that the longitudinal axis (32) of the transfer channel (30) forms a non-zero angle alpha, with the plane of symmetry (P) of the antechamber (5, 20) and the upper part of the piston (26) arranged in the cylinder being machined so as to define a clover-shaped cavity (36) having two approximately circular lobes as an extension of the transfer channel (30), and the orientation of the axis (32) of the transfer channel (30) of the antechamber (20) is obtained by turning the component (9) mounted inside the cylinder head (2), from its position in which the axis (32) of the rectilinear transfer channel (30) lies in the plane of symmetry of the antechamber (20), and that the radii (R1, R2) of the two lobes of the cavity (36) of the piston (20) are unequal.

2. An engine according to claim 1, characterized in that the two lobes of the clover-shaped cavity (36) join together at a point (34) situated a distance a from the axis (32) of the transfer channel (30).

3. An engine according to one of claims 1 or 2, characterized in that the orientation of the axis (32) of the transfer channel (30) is obtained by turning the mounted component (9) through 10 to 20°.

4. An engine according to one of claims 1, 2 or 3, characterized in that the ratio R1/R2 of the radii of the two unequal lobes of the cavity (36) is between 1 and 2.

5. An engine according to claim 2, characterized in that the distance a from the joining point (34) of the two lobes of the cavity (36) to the axis (32) of the transfer channel (30) is between 0.5 and 10 mm.

# FIG.1

FIG.2

FIG.3

FIG.4

FIG.5